# FASCICULE DE BREVET EUROPEEN

(11) **EP 0 608 923 B1**
(45) Date de publication et mention de la délivrance du brevet: **15.09.1999**
(21) Numéro de dépôt: 94200061.3
(22) Date de dépôt: 13.01.1994
(51) Int. Cl.: B09B 1/00

(54) **Procédé et installation pour l'évacuation et la récupération des déchets**
Verfahren und Anlage für die Entsorgung und Rückgewinnung von Abfällen
Method and plant for waste disposal and recovery

(43) Date de publication de la demande: 03.08.1994
(73) Titulaire: MARCOPOLO ENGINEERING S.r.l., I-12011 Borgo San Dalmazzo (CN) (IT)
(72) Inventeur: Bertolotto, Antonio, I-12010 Vignolo CN (IT)

(56) Documents cités:
- EP-A- 0 363 508
- EP-A- 0 373 460
- WO-A-92/18261
- CH-A- 587 389
- DE-A- 3 131 100
- DE-A- 3 303 067
- DE-A- 4 134 451

## Description

La présente invention se réfère aux installation d'évacuation des déchets solides urbains et assimilables en général, et aux déchets produits par les petites communautés trop éloignées des installations existantes en particulier, come les petites villes insulaires et/ou de montagne.

Quoique très variées, les installations traditionnelles d'évacuation des décrits présentent toute une série d'inconvénients, tant sur le plan fonctionnel que sur le de leur impact sur l'environnement, sans parler des risques de pollution du sol, des nappes phréatiques et de l'atmosphère et, enfin, de leur cout.

Vous trouverez ci-après la liste de certains de ces inconvénients constatés sur des installations qui sont actuellement utilisées, afin de bien cerner les avantages offerts par l'invention en objet.

Les installations d'évacuation des déchets solides urbains et assimilables en général, et celles qu'utilisent les communautés isolées en particulier - villages de montagne et/ou insulaires par exemple - sont traditionnellement composées d'un site de stockage préexistant - vieilles carrières abandonnées - ou obtenu par creusement du terrain, sur lesquel on dépose des gaines, en polyéthylène par exemple, avant d'y entasser plusieurs couches de déchets jusqu'à ce que la fosse soit pleine.

Entre chaque couche de déchets, on dépose de la terre ou des matières inertes que l'on recouvre d'une couche de terreau agricole destiné à la culture d'arbres chargés de filtrer la fosse et son contenu.

Très connus, ces systèmes d'évacuation des déchets n'en présentent pas moins de gros inconvénients, comme:
- en présence d'installations à ciel ouvert, émanations dues à la décomposition des substances organiques;
- préjudice esthétique lié à l'impact visuel de ce type d'installation;
- volatisation des parties légères;
- faible rendement volumétrique du site suite au dépot de déchets en vrac ou broyés;
- présence de volatiles d'animaux errants et de rats;
- controle difficile des différentes catégories de déchèts entreposés dans la décharge;
- risque de pollution des nappes phréatiques par suintement sous l'effet, notamment, de fortes précipitations atmosphériques;
- difficulté, voire impossibilité, de récupérer le gaz biologique qui se forme et, par suite, de l'utiliser pour produire de l'énergie, eletrique et thermique notamment;
- couts unitaires de fonctionnement et de dépot dans la décharge élevés et, surtout,
- impossibilité de réutiliser le meme site une fois que celui-ci est complètement rempli.

WO 92/18261 décrit une installation pour la production et la récolte de gaz combustible ayant les carateristiques du préambule de la revendication n.1

DE-A-3131100 se réfère à un processus et à un dispositif pour la rècolte du gaz de décomposition par dépots des ordures.

La présente invention vise essentiellement à éviter les inconvénients susmentionnés et porte notamment sur l'utilisation permanente, ou plutot devrions-nous dire "cylindre", d'un seul et unique site sur lequel sont déposés les déchets au moyen d'un processus de stockage innovateur.

Elle repose également sur l'utilisation de purins zootechniques, industriels ou urbains, dénués de substances polluantes, visant à maintenir le juste taux d'humidité de la biomasse accumulée et permettant d'enrichir cette dernière tout en contribuant à l'evacuation des déchets liquides.

Pour atteindre ces objectifs ainsi que ceux qui seront décrits en détail un peu plus loin, la présente invention a pour object une installation d'évacuation des déchets solides urbains et assimilables caracterisé en "une structure susceptible de permettre la limitation et la substitution des blocs susmentionnés, constituée d'un soubassement imperméabilisé en béton armé avec des parois verticales raides impermeabilisé qui définissent et séparent une pluralité de secteurs hermétiques adjacents ayant des cotés en commun et une partie frontale ouverte; ce réseau de conduites comprenant à proximité du sommet de chaque secteur une cheminée verticale pour le captage du bio-gaz, où les cheminées, au sommet de cages adjacentes, se rejoignent en surface formant une tête de puits commune à chaque groupe de cheminées adjacentes; ce reseau de tuyauteries comprenant une pluralité de tuyauteries horizontal placées sur le faîte de la biomasse pour y faire filtrer les eaux usées susmentionnées.

La présente invention, qui sera décrite plus en détail et illustrée par la suite, permet d'obtenir une installation cyclique d'évacuation et de récupération des déchets qui, non contente de pallier les inconvénients susdits, peut notamment etre exploitée de facon continue puisque, lorsque la fonction de bioréacteur du premier module sera tarie, il sera trés facile de la récupérer et de la réutiliser. Resultat: L'exploitation totale du site et du cycle de biodigestion des déchets, sur un nombre d'années préalablement déterminé ou pas, en vue d'obtenir du biogaz à forte teneur en méthane (55-65%) et donc d'énergie, et des materiaux résiduels.

L'énergie produite provient d'une source intarissable; de fait, grace à la rotation des modules, le rendement énergétique atteint pratiquement son apogée (95-98%) en vertu d'un système complètement automatique et sous controle total, la récupération étant effectuée au terme d'une periode optimale pour la production du biogaz qui, si l'on en croit les expériences menées à l'échelle mondiale, atteint 70% au bout des douze premières années.

L'installation pilote que nous venons de décrire permet d'affirmer que le potentiel énergétique du système est de l'ordre de 500 kWh électriques et 850 kWh thermiques constants au fur et à mesure de la rotation des modules.

Vous trouverez ci-après une description détaillée de la présente invention, assortie de plans fournis à titre d'exemple non limitatif:
- fig. 1: schéma en perspective de l'installation telle qu'elle résulte de la présente invention;

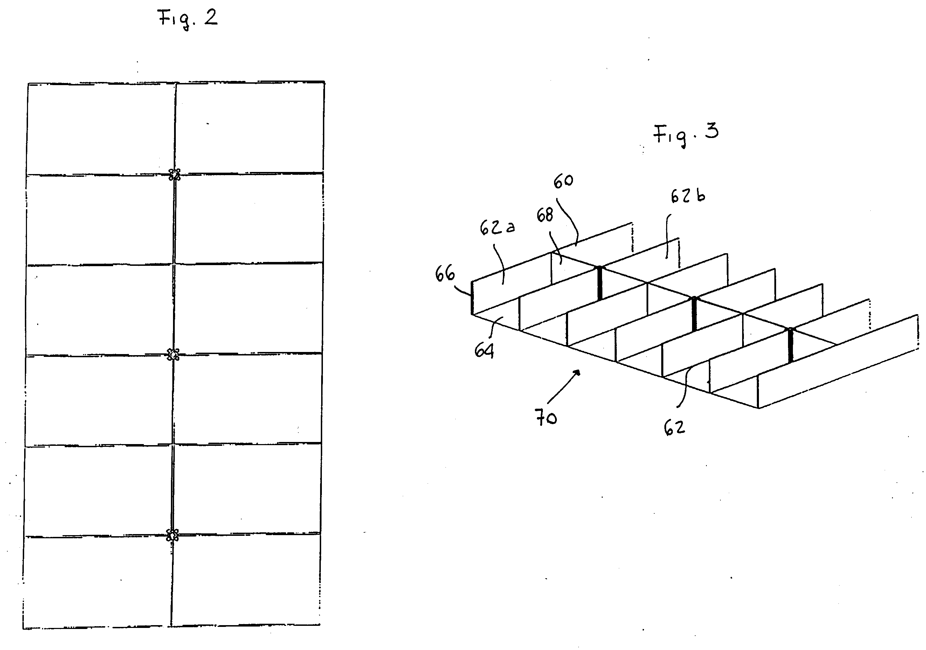

- fig. 2 et 3: représentation, vue d'en haut et en perspective, de la structure destinée à contenir les déchets;
- fig. 4: coupe agrandie d'une partie de la fig. 1 visant à illustrer la conformation d'un des modules qui composent l'installation, situé à l'intérieur d'une des cages qui constituent la structure destinée à contenir les déchets;
- fig. 5: section du module de la fig. 2 représentant les modalités de réalisation de ce dernier;
- fig. 6 et 7: agrandissement d'un détail de la fig. 2 visant à illustrer deux modalités d'application de la gaine en utilisant deux matériaux différents;
- fig. 8, 9 et 10: vue en coupe des cheminées de captage du biogaz introduites à l'intérieur des modules, vue en plan desdites cheminées et vue partielle en perspective d'une d'entre elles.

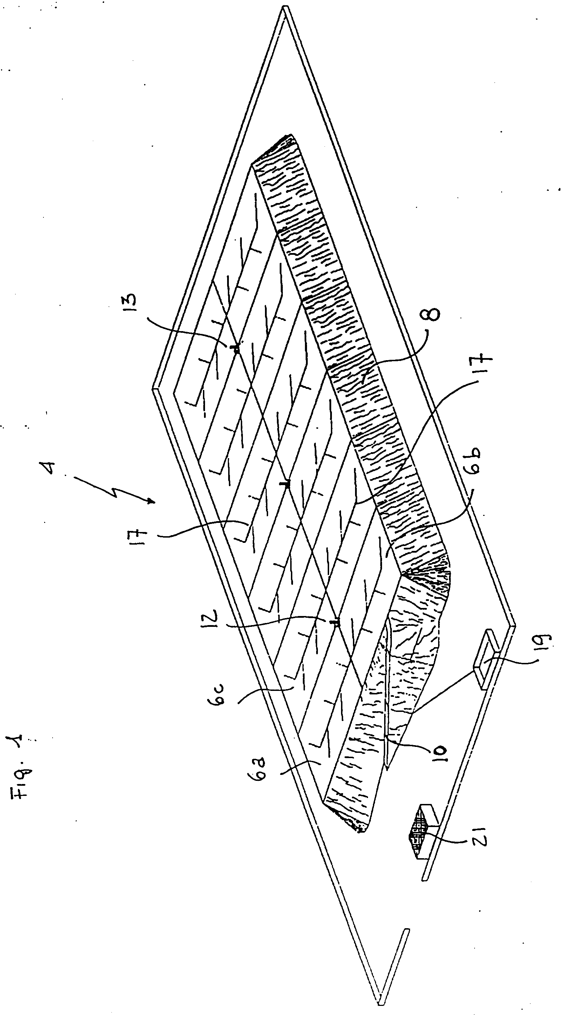

Sur la fig. 1, le nombre 4 indique l'installation d'évacuation et de récupération des déchets dans son ensemble telle qu'elle se présente une fois terminée. Dans l'exemple que nous avons pris en considération, ladite installation est constituée de douze modules parallélépipédiques (6a, 6b, etc.) protégés par un terre-plein périmétral (8) et dotés d'une rampe d'accès (10); sur les côtés en contact des trois groupes de quatre modules, le chiffre 12 indique la partie saillante des cheminées de captage du biogaz, décrites ci-après, constituées d'une tête de puits (13) et d'une torche de combustion de secours (15).

Toujours sur la fig. 1, le chiffre 17 indique la série de tubes permettant d'introduire le purin à l'intérieur des modules, purin servant à maintenir un taux d'humidité constant; le chiffre 19, quant à lui, indique la cuve de stockage, d'introduction du purin et de collecte du suintement pouvant éventuellement être recyclé, et le chiffre 21 des locaux pouvant être utilisés pour le dépôt, l'analyse et l'épuration des substances recueillies à travers les cheminées de captage.

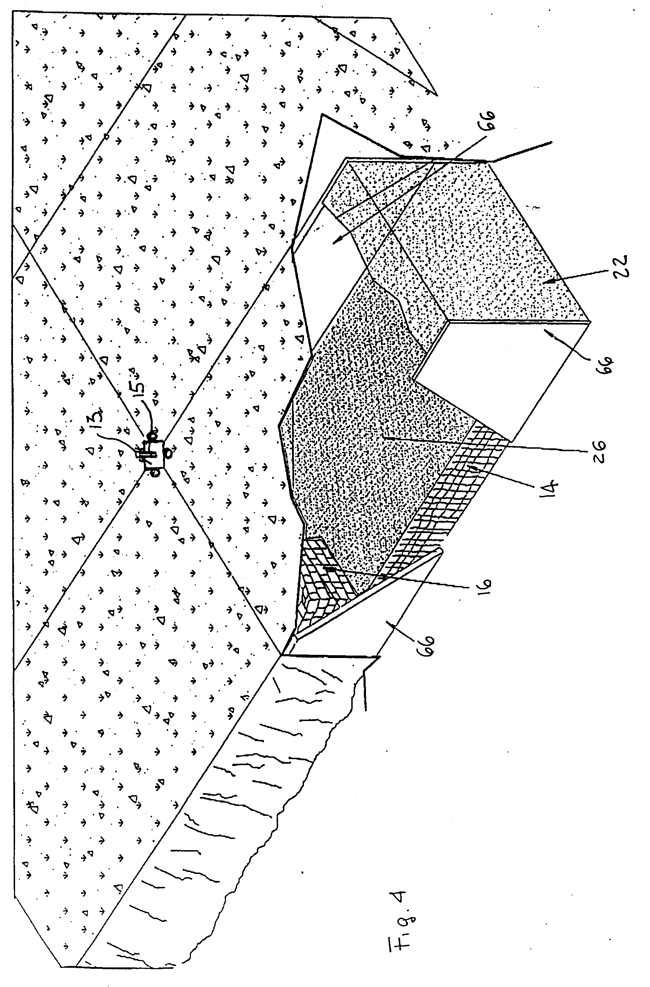

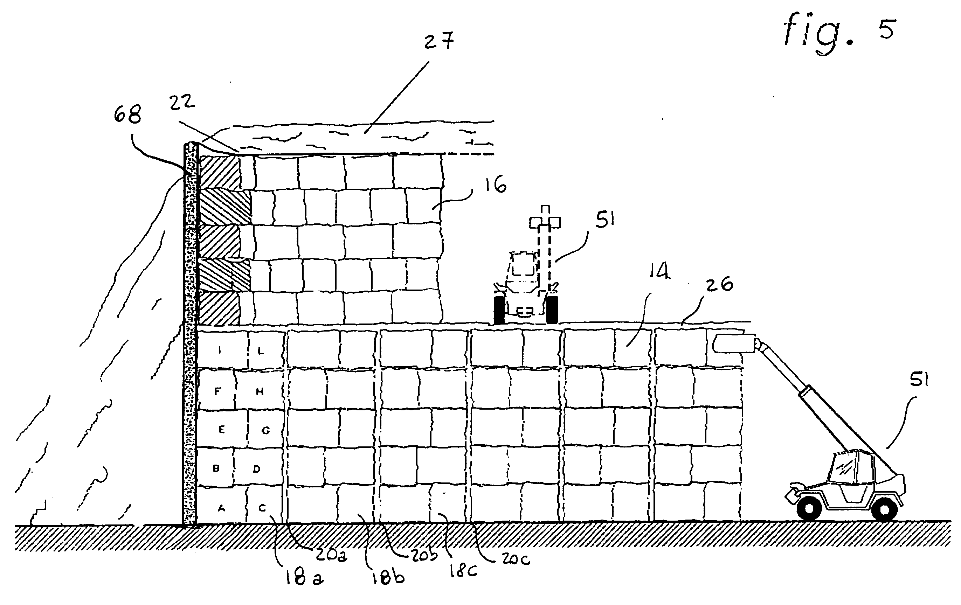

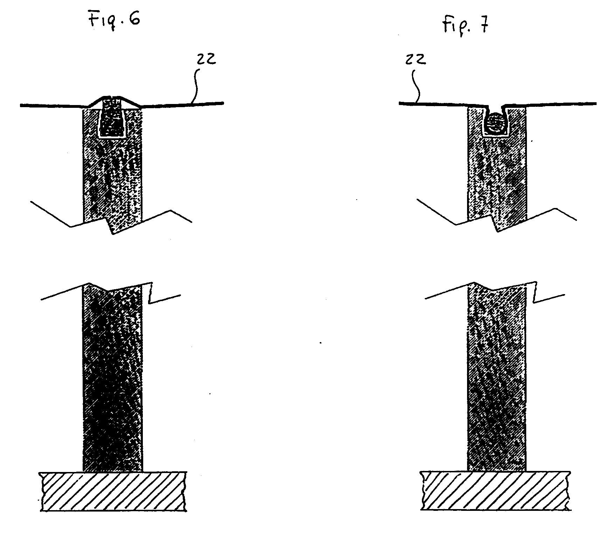

L'installation telle qu'elle est représentée sur la fig. 3 comprend une structure (60), en béton armé de préférence et traité de façon à en augmenter l'étanchéité, mais aussi en bois imperméabilisé; cette structure est elle-même composée d'une série de cages parallélépipédiques - douze dans ce cas précis - (62a, 62b, etc.) formées d'un socle (64), de cloisons latérales (66) et d'une cloison postérieure (68); bien entendu, chaque cage partage ses cloisons latérales et sa cloison postérieure avec la cage voisine et présente une entrée (70) permettant d'emmagasiner les modules.

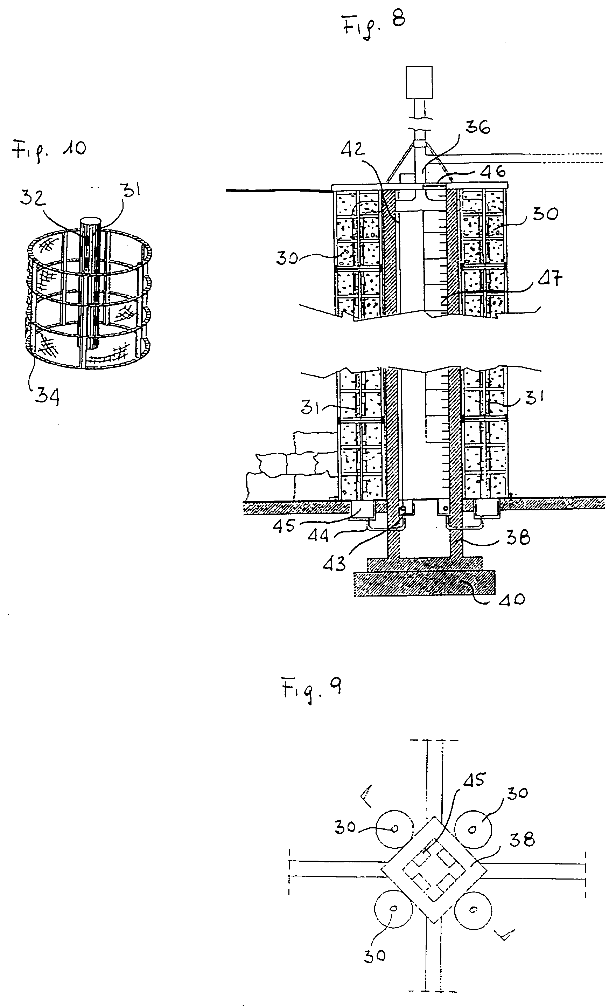

Comme on peut le constater sur les fig. 4 et 5, chaque module est composé de deux cultures, une inférieure (14) et une supérieure (16), elles-mêmes composées d'une série de blocs (18a, 18b, etc.) obtenus par compactage des déchets solides à l'aide d'une presse liante automatique (non illustrée) pouvant éventuellement être basée à proximité du centre urbain afin de réduire les frais de transport des déchets; lesdits blocs sont entassés dans un ordre bien précis (A, B, C, D, etc.) par un engin à bras télescopique pivotant et pinces horizontales (51) et disposés de façon à former des couloirs (20a, 20b, etc.) de migration du biogaz produit par les déchets.

Une fois terminée, la partie supérieure du module est imperméabilisée au moyen d'une gaine (22), en polyéthylène de préférence, fixée (voir fig. 6 et 7) à la partie supérieure des parois des cages selon qu'il s'agit de gaines en HDPE (fig. 6) ou en LDPE (fig. 7).

Pour bloquer les gaines (22), il suffit de les insérer dans le fer en "U" que l'on aura placé dans une rainure pratiquée tout le long des parois en béton armé et du socle et de les bloquer à l'aide d'un bandage en caoutchouc appliqué par simple pression (voir fig. 7) en présence d'une gaine de faible épaisseur et très souple ou, en alternative, d'appliquer par simple pression un support en HDPE auquel sera fixée, par thermosoudure, une gaine plus épaisse et moins souple (voir fig. 6).

Il faut préciser que, comme on peut le constater sur les fig. 4 et 5, la première culture inférieure (14) et la seconde culture supérieure (16) sont séparées par une couche de terre (26).

Après imperméabilisation du module, on place les tubes (17) en HDPE dotés d'une goulotte filetée permettant d'introduire le purin destiné à garantir l'humidité nécessaire à la biomasse; ledit purin, constitué de déchets liquides dénués de toute trace de métaux lourds ou de résidus chimiques et prélevé notamment dans des abattoirs, des huileries ou des fromageries, est en mesure, en vertu de sa composition, d'augmenter la production de biogaz ou du suintement récupéré et recyclé.

Il va sans dire que les tubes (17) devront être positionnés de façon à éviter toute fuite du biogaz, autrement dit en zigzag, sur la toile en polyéthylène qui recouvre le module, toile qui sera elle-même dotée de goulottes filetées dans lesquelles pourront être enfilées les goulottes situées sur l'extrémité libre desdits tubes.

En alternative, lesdits tubes pourront être positionnés sous la toile en polyéthylène, à condition que la goulotte filetée dépasse de ladite toile.

Après installation des tubes (17), le module sera recouvert de terre (27).

En présence d'un module contenant, par exemple, 11.000 tonnes de déchets, les critères fondamentaux permettant d'obtenir une quantité de biogaz de l'ordre de plus ou moins 29 Nm3/h, correspondant à environ 47 kWH électriques et 78 kWH thermiques sont:
- des modules totalement étanches/imperméables
- des modules disposés les uns à côté des autres de façon à engendrer un échange de chaleur;
- le maintien d'un taux d'humidité constant à l'intérieur de chaque module moyennant l'adjonction contrôlée de purin;
- la possibilité de piloter et de contrôler à tout moment le processus de biodigestion.

Respecter ces critères, c'est permettre aux modules qui composent l'installation de se comporter comme de véritables modules "digérants" au même titre, naturellement, que l'ensemble de l'installation.

Pour réussir à capter le biogaz engendré, on fait appel, comme précisé ci-avant, à des cheminées de captage (30) constituées (voir fig. 8, 9 et 10) d'un tube en HDPE (31), doté d'une goulotte (32) permettant la migration forcée du biogaz, positionné dans l'angle du module (fig. 9) et soutenu par une grille (34) en fer tubulaire remplie de gravillons ronds (fig. 10). Les cheminées, positionnées sur les quatre modules attenants de façon à rester en contact avec les déchets d'où, à travers les gravillons, s'échappent le biogaz et le suintement en excès, confluent vers une seule et unique tête de puits (36 - fig. 8); le tout est soutenu par une structure composée d'une tour en béton armé (38) posée sur un socle (40), lui aussi en béton armé, dans laquelle se trouve (voir fig. 8) un tube (42) permettant de pomper le suintement, tube qui se termine par une petite cuvette (43) reliée, par l'intermédiaire d'un siphon (44) à la fosse (45) de collecte du suintement située à la base desdites cheminées. Une trappe (46) et un escalier en colimaçon (47) permettent de contrôler la totalité de la structure.

Le suintement recueilli dans les fosses est convoyé, à travers le siphon, vers les cuves de pompage; il est ensuite prélevé à l'aide du tube de pompage, arrive dans la cuve externe (19) et peut éventuellement être réutilisé en tant que purin pour maintenir le taux d'humidité à l'intérieur de l'installation.

Après avoir été analysé et épuré dans les locaux susmentionnés (21), le biogaz collecté à l'intérieur des cheminées de captage peut être utilisé pour produire, par exemple, de l'énergie électrique.

Il va sans dire, sans préjudice du caractère novateur de cette invention, que celle-ci pourra se concrétiser de façon tout à fait différente par rapport à celle que nous venons de décrire.

On peut notamment envisager un type différent de structure destinée à contenir les modules; en lieu et place de la structure modulaire en béton armé ou en bois proposée dans notre exemple, il est possible de déposer une gaine sur le fond du site et de la fixer, par thermosoudure, à la gaine qui recouvre le module après achèvement de ce dernier.

La forme de ladite structure peut également être différente: on peut notamment prévoir un socle polygonal, circulaire ou irrégulier en lieu et place du socle parallélépipédique mentionné dans notre exemple. En présence d'un socle polygonal, par exemple, les cages se présenteront sous forme de prismes et il suffira d'une seule tour pour supporter les cheminées de captage, placée au centre et desservant chaque module constitué à l'intérieur des cages.

Enfin, en fonction du type de terrain sur lequel on décidera de construire l'installation, on pourra évidemment disposer les modules à distance les uns des autres moyennant un dispositif permettant de les raccorder entre eux de façon que le biogaz produit conflue vers une seule aire de collecte.

## Revendications

1. Installation pour l'emplacement de déchets et de la récupération du bio-gaz formé par leur décomposition comportant
une enceinte avec une imperméabilisation en surface (22), recouverte de terre (27) pour lesdits déchets compactés en forme de blocs (18) stockables sur un soubassement (64) impermeabilisé,
incorporant un premier réseau de tuyauteries pour apporter sous contrôle des eaux usées aux bloc de la biomasse des déchets afin de fournir le taux d'humidité nécessaire à la formation de bio-gaz et un deuxième réseau de conduites installé dans la biomasse des déchets pour le captage du bio-gaz avec des cheminés verticales se rejoignant à la tête de l'installation,
caractérisée en ce que
l'enceinte est formé par de structure (60) en béton armé avec des parois (66, 68) verticales raides impermeabilisées permettant un stockage limité et la substitution des bloc (18) susmentionnées,
les parois (66, 68) de la structure (60) définissant et séparant une pluralités de secteurs (62) hermétiques adjacents ayant des cotés en commun et une partie frontale ouverte (70),
le premier réseau de conduites comprenant une pluralité de tuyauteries horizontales (17) placées sur le faite de la biomasse pour y faire filtrer les eaux usées susmentionnées, le deuxième réseau de conduites comprenant à proximité du sommet de chaque secteur (62) une cheminée (30) verticale pour le captage du bio-gaz, les cheminées formant une tête de puits commune pour chaque groupe de cheminées adjacentes.

2. Installation comme à la revendication 1, caractérisée par une pluralité de structures en forme de tour (38) en béton armé soudées au soubassement (64), susceptibles de supporter chacune une tête de puits (36); ce réseau de canalisations comprenant une pluralité de tuyaux (42) situés dans les structures en forme de tour (38) pour le pompage et l'évacuation de la substance recuillie à la base des secteurs (62) par l'intermédiaire de siphons (44) qui traversent les parois des structures en forme de tour (38).

3. Installation comme à la revendication 1, caractérisée par ses tuyauteries horizontales (17) ramifées et disposées en forme d'arête de poisson.

4. Installation comme à la revendication 1, caractérisée par son imperméabilisation en surface constituée d'une gaine horizontale imperméable (22) fixée au sommet des parois (66) pour recouvrir la biomasse.

5. Installation comme aux revendications 1 et 4, caractérisée par ses tuyauteries horizontales (17) disposées au-dessous de la gaine (22).

6. Installation comme aux revendications 1 et 4, caractérisée par ses tuyauteries horizontales (17) disposées au-dessus de la gaine (22).

7. Installation comme à la revendication 6, caractérisée par le fait que les extrémités libres de ses tuyauteries sont équipées d'un embout permettant le raccordement à un autre embout correspondant incorporé dans la gaine (22).

## Claims

1. A plant for disposal of waste and recovery of biogas formed by the decomposition thereof, comprising a housing with a surface impermeabilization (22), covered with earth (27) for said waste compacted in form of blocs (18) capable of being stocked upon an impermeabilized basement (64), incorporating a first network of pipes for supplying ooze to the biomass waste blocks in order to provide the rate of humidity required for the formation of biogas and a second network of conduits installed in the waste biomass for capturing the biogas with vertical chimneys adjoining at the top of the plant,
characterised in that the housing is formed by a reinforced concrete structure (60) with vertical impermeabilized walls (66, 68) permitting a limited stock and the replacement of the aforesaid blocs (18),
the walls (66, 68) of the structure (60) defining and separating a plurality of adjacent hermetically sealed sections (62) having common sides and an open front part (70),
the first network of conduits comprising a plurality of horizontal pipes (17) placed on the top of the biomass to allow filtering of the above said ooze, the second network of conduits comprising proximate to the top of each section (62) a vertical chimney (30) for capturing biogas, the chimneys forming a common well head for each group of adjacent chimneys.

2. A plant according to claim 1, characterised by a plurality of structures in form of reinforced concrete towers (38) integral with the basement (64), adapted for supporting each a well head (36), the network of conduits comprising a plurality of tubes (42) located within the tower-shaped structures (38) for pumping away and scavenging the matter gathered at the bottom of the sections (62) by means of siphons (44) passing through the walls of the tower-shaped structures (38).

3. A plant according to claim 1, characterised in that the horizontal pipes (17) are disposed branching in a herringbone pattern.

4. A plant according to claim 1, characterised in that its surface impermeabilization is comprised of an impermeable horizontal sheath (22) fixed at the top of the walls (66) for covering the biomass.

5. A plant according to claims 1 and 4, characterised in that the horizontal pipes (17) are located beneath the sheath (22).

6. A plant according to claims 1 and 4, characterised in that the horizontal pipes (17) are located above the sheath (22).

7. A plant according to claim 6, characterised in that the free ends of said pipes are equipped with a pipe fitting providing connection to another corresponding pipe fitting incorporated in the sheath (22).

## Patentansprüche

1. Eine Anlage für die Entsorgung von Müll und die Gewinnung des sich durch dessen Zersetzung bildenden Biogases, die ein Gehäuse mit einer Oberflächenabdichtung (22) umfaßt, das mit Erde (27) bedeckt ist, für den besagten, in Form von Blöcken (18) zusammengepreßte Müll, der auf einem abgedichteten Untergestell (64) gelagert werden kann, und ein erstes Netzwerk aus Rohrleitungen für die Lieferung der Sickerflüssigkeit an die Biomassen-Müllblöcke, wodurch für die entsprechende Feuchtigkeitsmenge gesorgt wird, die für die Bildung von Biogas benötigt wird, sowie ein zweites Netzwerk von Leitungen, die in der Müll-Biomasse installiert sind, um das Biogas mit Hilfe von senkrechten Kaminen einzufangen, die an der Spitze der Anlage aneinandergrenzen,
dadurch gekennzeichnet, daß das Gehäuse aus einer verstärkten Betonstruktur (60) mit senkrechten, abgedichteten Wänden (66, 68) besteht, die eine begrenzte Lagermenge und die Austauschung der oben erwähnten Blöcke (18) ermöglicht,
wobei die Wände (66, 68) der Struktur (60) mehrere anliegende, hermetisch versiegelte Abschnitte (62) bilden und trennen, die gemeinsame Seiten und eine offene Vorderseite (70) aufweisen,
und das erste Netzwerk von Rohrleitungen mehrere, waagerecht verlaufende Rohre (17) umfaßt, die oben auf der Biomasse liegen, um das Filtrieren der oben erwähnten Sickerflüssigkeit zu erlauben, wobei das zweite Netzwerk von Leitungen in der Nähe der Spitze jedes Abschnitts (62) einen senkrechten Kamin (30) umfaßt, mit dem das Biogas eingefangen wird, und die Kamine eine gemeinsame Schachteinfassung für jede Gruppe der anliegenden Kamine bilden.

2. Eine Anlage gemäß Anspruch 1, dadurch gekennzeichnet, daß sie mehrere Strukturen in Form von verstärkten Betontürmen (38) umfaßt, die mit dem Untergestell (64) eine Einheit bilden und die jeweils eine Schachteinfassung (36) tragen, wobei das Netzwerk von Leitungen zahlreiche Rohre (42) umfaßt, die in den turmförmigen Strukturen (38) angeordnet sind, um das sich am Boden der einzelnen Abschnitte (62) angesammelte Material mit Hilfe von Siphons (44) wegzuspülen und zu -pumpen, die durch die Wände der turmförmigen Strukturen (38) führen.

3. Eine Anlage gemäß Anspruch 1, dadurch gekennzeichnet, daß die waagerechten Rohre (17) so angeordnet sind, daß sie in einer fischgrätähnlichen Form enden.

4. Eine Anlage gemäß Anspruch 1, dadurch gekennzeichnet, daß ihre Oberflächenabdichtung aus einer waagerechten, undurchlässigen Abdeckung (22) besteht, die oben an den Wänden (66) befestigt ist und die Biomasse abdeckt.

5. Eine Anlage gemäß den Ansprüchen 1 und 4, dadurch gekennzeichnet, daß die waagerechten Rohre (17) unterhalb dieser Abdeckung (22) verlaufen.

6. Eine Anlage gemäß den Ansprüchen 1 und 4, dadurch gekennzeichnet, daß die waagerechten Rohre (17) oberhalb der Abdeckung (22) angeordnet sind.

7. Eine Anlage gemäß Anspruch 6, dadurch gekennzeichnet, daß die freien Enden der besagten Rohre mit einem Rohrfitting ausgestattet sind, durch das die Verbindung zu einem anderen, ihm zugeordneten Rohrfitting hergestellt wird, das in die Abdeckung (22) eingebaut ist.
